(19) Europäisches Patentamt
European Patent Office
Office européen des brevets

(11) Veröffentlichungsnummer: **0 008 110**
**B1**

(12) # EUROPÄISCHE PATENTSCHRIFT

(45) Veröffentlichungstag der Patentschrift: **06.04.83**

(51) Int. Cl.³: **C 09 J 3/14,** C 08 L 51/00

(21) Anmeldenummer: **79102855.8**

(22) Anmeldetag: **08.08.79**

(54) **Klebstoff bzw. Klebstoffkomponente und seine bzw. ihre Verwendung zum Verkleben von zwei Oberflächen.**

(30) Priorität: **16.08.78 CH 8693/78**
**02.11.78 CH 11293/78**
**08.02.79 CH 1242/79**

(43) Veröffentlichungstag der Anmeldung: **20.02.80 Patentblatt 80/4**

(45) Bekanntmachung des Hinweises auf die Patenterteilung: **06.04.83 Patentblatt 83/14**

(84) Benannte Vertragsstaaten: **AT CH DE FR GB IT NL SE**

(56) Entgegenhaltungen:
**FR-A-2 227 306**
**SU-A- 418 472**

(73) Patentinhaber: **CIBA-GEIGY AG, Patentabteilung Postfach, CH-4002 Basel (CH)**

(72) Erfinder: **Forgò, Imre, Dr., Am Stausee 27/15, CH-4127 Birsfelden (CH)**
Erfinder: **Zahir, Sheik Abdul-Cader, Dr., Elsternstrasse 12, CH-4104 Oberwil (CH)**
Erfinder: **François, Jacques, 4, Rue de l'Abattoir, F-68330 Huningue (FR)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 008 110 B1

# Klebstoff bzw. Klebstoffkomponente und seine bzw. ihre Verwendung zum Verkleben von zwei Oberflächen

Die Erfindung betrifft einen Klebstoff bzw. eine Klebstoffkomponente, welche ein polymerisierbares Vinylmonomer, ein Vinylpolymer, eine freie Radikale erzeugende Verbindung und ein Säureamid oder -imid, welches am Stickstoffatom durch eine chlorsulfonierte Alkyl-, Aryl- oder Aralkylgruppe substituiert ist, als Haftverbesserer enthält. Ferner bezieht sie sich auf die Verwendung des Klebstoffes bzw. der Klebstoffkomponente zum Verkleben von zwei Oberflächen.

Aus der DE-A 23 37 049 ist eine Klebstoffzusammensetzung als zweiteiliges System auf der Basis von polymerisierbaren Vinylmonomeren, z. B. Methylmethacrylat, und Polymerisationskatalysatoren bekannt. Durch Zusatz von chlorsulfoniertem Polyethylen oder Mischungen von Sulfonylchlorid und chloriertem Polyethylen wird versucht, die Mängel bekannter Klebstoffzusammensetzungen auf der Grundlage von polymerisierbaren Vinylmonomeren zu beheben, nämlich die geringe Lagerstabilität, die oft langen Härtungszeiten, die ungenügende Bindungsfestigkeit oder auch die erforderliche Abwesenheit von Luft. Es ergeben sich nach dem Verkleben von zwei Oberflächen, wobei der Härtungsvorgang durch Zusatz eines Beschleunigers sehr kurz ist, Bindungen mit hoher Zugscherfestigkeit, die jedoch den Anforderungen bei höheren Temperaturen (über 50° C), bei Haftung von öligen Oberflächen oder bei Wasserlagerung nicht genügen. Ferner ist die Verbesserung der Lagerfähigkeit nicht in allen Fällen gewährleistet.

Ähnliche Klebstoffzusammensetzungen werden in der DE-A 25 25 099 beschrieben. Anstelle des chlorsulfonierten Polyethylens werden andere chlorsulfonierte Polymere oder Polymere zusammen mit niedermolekularen organischen Sulfonylchloriden verwendet. Als solche werden Alkyl- und Arylsulfonylchloride, Methan-, Butan-, Tridecan-, 2-Naphthalin-, p-Toluolsulfonylchlorid oder Diphenylether-4, 4'-Disulfonylchlorid, genannt. Diese Zusammensetzungen zeigen, soweit sie überprüft wurden, jedoch nicht die gewünschten Zugscherfestigkeiten.

Auch die Verwendung ähnlicher Klebmittel in Form von trägerlosen Folien oder als Film auf einem Trägermaterial ist bereits bekannt, z. B. aus der deutschen Auslegeschrift 25 24 197.

Es war nicht zu erwarten, dass die Verwendung der im Anspruch 1 definierten Verbindungen in Klebstoffen auf Basis von Vinylmonomeren und von nicht besonders reaktiven Vinylpolymeren die angeführten Mängel zu beheben vermag. Mit diesem Haftverbesserer können jedoch wärme-, öl- und wasserresistente Verklebungen mit hoher Zugscherfestigkeit erzielt werden.

Die Erfindung betrifft daher einen Klebstoff bzw. eine Klebstoffkomponente, enthaltend 30 bis 80 Gew.-% mindestens eines polymerisierbaren Vinylmonomers und 10 bis 50 Gew.-% mindestens eines Vinylpolymers, 0,05 bis 10 Gew.-% einer freien Radikale erzeugenden Verbindung sowie als Haftverbesserer eine Verbindung mit der Gruppe $-SO_2Cl$, wobei der Klebstoff bzw. die Klebstoffkomponente dadurch gekennzeichnet ist, dass er bzw. sie als Haftverbesserer 0,1 bis 15 Gew.-% eines am Stickstoffatom durch eine chlorsulfonierte Alkyl-, Aryl- oder Aralkylgruppe substituierten Säureamids oder -imids der Formel I

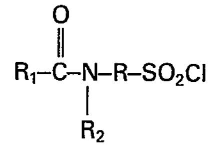

(I)

enthält, in welcher R eine Alkylengruppe mit 1 bis 25 Kohlenstoffatomen oder eine gegebenenfalls substituierte Phenylen-, Naphthylen- oder Phenylenalkylengruppe mit 1 bis 4 Kohlenstoffatomen im Alkylenteil, $R_1$ und $R_2$ je Wasserstoff oder eine Alkylgruppe mit 1 bis 4 Kohlenstoffatomen oder $R_1$ und $R_2$ zusammen mit der angegebenen 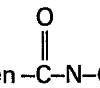-Gruppe einen heterocyclischen Ring, der gesättigt oder ungesättigt und durch 1 oder 2 Methylgruppen substituiert sein kann und ausser dem in der Formel I angegebenen N-Atom kein weiteres Heteroatom im Ring aufweist, bedeuten, wobei die Prozentangaben auf den Klebstoff bzw. die Klebstoffkomponente bezogen sind. Vorzugsweise bedeuten $R_1$ und $R_2$ zusammen mit 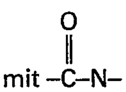 die Maleinimidgruppe, die noch durch 1 oder 2 Methylgruppen substituiert sein kann, und R die Phenylengruppe, aber auch die o- oder p-Tolylengruppe.

Vorzugsweise werden als Vinylmonomere Methyl- oder Ethylacrylat, Methyl-, Ethyl-, Butyl- oder Hydroxyethylmethacrylat, Glycidylmethacrylat, Styrol, Chlorstyrol, 2-Chlor-1-3-butadien und/oder 2,3-Dichlor-1, 3-butadien verwendet.

Als Vinylpolymere kommen vor allem die nicht besonders reaktiven Polymeren, wie Acrylnitril-Butadien-Styrol-Terpolymere (ABS-Polymere in Pulver- oder Granulatform), Butadien-Styrol-Copolymere, Isopren-Styrol-Copolymere, Polistyrole und/oder chlorierte Polyethylene in Frage, im weiteren aber auch Polybutadiene, Polyisoprene, ungesättigte Polyester (Alkydharze), wie solche aus Maleinsäureanhydrid und Polyethylenglykol oder aus Fumarsäure und Diglycidylether von Bisphenol A (mit endständigen Acrylgruppen).

Bei den freie Radikale erzeugenden Verbindungen handelt es sich z. B. um organische Peroxide, Hydroperoxide, Perester oder Persäuren, insbesondere um Cumolhydroperoxid oder Benzoylperoxid. Ihre Menge beträgt vorzugsweise 0,05 bis 3 Gew.-%, bezogen auf die Klebstoffkomponente.

Der Klebstoff bzw. die Klebstoffkomponente enthält vorzugsweise weitere Stoffe, welche die Eigenschaften der Verklebungen, ihre Handhabung beim Verkleben oder Geschwindigkeit des Verklebens noch weiter verbessern können.

Dazu gehören insbesondere die in den folgenden Punkten erwähnten Stoffe:

a) Haftverbesserer in einer Menge von 5 bis 20 Gew.-%, bezogen auf den Klebstoff bzw. die Klebstoffkomponente, insbesondere Methacrylsäure;

b) Vernetzer, 0,1 bis 10 Gew.-%, insbesondere bis 5 Gew.-%, d.h. Verbindungen mit mehreren funktionellen Gruppen, wie Dimethacrylate, z.B. 1,3-Butylenglykoldimethacrylat, Ethylenglykoldimethacrylat; Polyethylenglykoldimethacrylat oder Divinylbenzol;

c) Verdampfungsinhibitor, 0,1 bis 10 Gew.-%, insbesondere 1 bis 10 Gew.-%, z.B. Chlorparaffine mit 30-70, insbesondere 50-60 Gew.-% Chlor. Diese Stoffe dienen zur Verlängerung der sogenannten offenen Zeit, d.h. der Zeit zwischen dem Aufbringen des Klebstoffes bzw. der Klebstoffbestandteile auf die zu verklebenden Flächen und dem Zusammenfügen dieser Flächen;

d) Stabilisator (Antioxydans) zur Verlängerung der Lagerbeständigkeit des Klebstoffes bzw. der Klebstoffkomponente, 0,1 bis 10 Gew.-%, gelegentlich auch nur 0,1 bis 2 Gew.-%, wobei Hydrochinon, Chinon oder 2,6-Di-tert.-butyl-p-kresol (Jonol) in Frage kommen. Im Falle von Einkomponentenklebstoffen, d.h. von Systemen, die heiss gehärtet werden, sollte kein Stabilisator zugemischt werden, weil anscheinend eine Reaktion zwischen den Peroxiden und dem Stabilisator auftritt, die die Heisshärtung verhindern kann;

e) Mono- oder Dicarbonsäuren, 0,1 bis 10 Gew.-%, die teilweise als weitere Zusätze, teilweise anstelle von Acrylat eingesetzt werden, erhöhen die Klebbindung. Es handelt sich dabei vorzugsweise um p-Toluolsulfonsäure, Weinsäure, Maleinsäure, Fumarsäure, Glutarsäure oder Bernsteinsäure;

f) Haftvermittler, 0,1 bis 10 Gew.-%, insbesondere bis 2 Gew.-%, wobei Silane in Betracht kommen, z.B. γ-Methacryloxypropyltrimethoxysilan;

g) Epoxidharz, 0,1 bis 10 Gew.-%, zur Verbesserung der Haftwirkung. Es eignen sich flüssige bekannte Epoxidharze auf Bisphenol A-Basis;

h) Pigmente, 0,1 bis 10 Gew.-%, dienen zum besseren Sichtbarmachen der mit dem Klebstoff bzw. der Klebstoffkomponente bestrichenen Oberflächen. Es können bekannte anorganische oder organische Pigmente eingesetzt werden;

i) Zugabe von Polyalkylenpulver, z.B. Polyethylen, bewirkt die Verbesserung der Haftung auf Polyalkylenfolien.

Zum Verkleben von zwei Oberflächen wird der Klebstoff bzw. die Klebstoffkomponente gemäss der Erfindung, welcher oder welche einen oder mehrere der eben genannten Zusätze enthalten kann, ohne einen Beschleuniger oder zusammen mit einem solchen (sog. Zweikomponentensystem) verwendet.

Im ersten Fall werden die zu verklebenden Oberflächen nach dem Aufbringen des Klebstoffes auf eine oder beide Teile während 15 Minuten bis 1 Stunde offen gelassen (bzw. im Fall von Stahlstükken sofort zusammengefügt) und während einiger Minuten bis einiger Stunden auf eine Temperatur von 80° C bis 250° C erwärmt. Es kann vorteilhaft sein, wenn man das verklebte Gebilde vor dem Erwärmen während einigen Minuten bis zu einigen Stunden bei Raumtemperatur belässt.

Falls man die Erwärmung mittels einer Hochfrequenzheizung (z.B. des HF-Industriegenerators dielektrisch 500 W der Firma Hasler AG, Bern) durchführt, kann einerseits die Verklebungszeit erheblich verkürzt und anderseits die sogenannte «Offenzeit» (vgl. weiter unten) verlängert werden.

Vorzugsweise geht man bei der Verwendung des Klebstoffes als Einkomponentensystem, d.h. ohne den Zusatz eines Beschleunigers, so vor, dass man den Klebstoff auf die zu verbindenden Oberflächen aufträgt, die beschichteten Teile während 15 Minuten bis zu einigen Stunden offen stehen lässt und anschliessend während einer Stunde bei etwa 100° C oder während einigen Minuten im Hochfrequenzofen aushärtet. Der Nachteil, den die höhere Aushärtungstemperatur gegenüber dem Vorgehen bei der Verwendung eines Zweikomponentensystems (2. Komponente ist ein Beschleuniger) mit sich bringt, wird durch die längere «Offenzeit» aufgewogen. Unter der «Offenzeit» oder «offenen Zeit» versteht man die Zeitdauer, während welcher der auf dem Adherend aufgetragene Klebstoff offen liegen kann, ohne dass seine Klebfähigkeit verlorengeht. Die längere Offenzeit entsteht dadurch, dass man die Schicht etwas dicker auftragen kann als beim Zweikomponentensystem und die Schicht unter der Oberflächenschicht, welche den Lufteinfluss auf die tiefer liegenden Anteile der Schicht verhindert, noch längere Zeit aktiv bleiben kann. Im weiteren weist das Einkomponentensystem den Vorteil einer einfacheren Applikation auf.

Der Klebstoff kann mit Vorteil als Einkomponentensystem in die Form eines Klebefilms oder -folie mit oder ohne Träger gebracht werden.

Für die Herstellung eines Films mit Träger kann der erfindungsgemässe flüssige Klebstoff auf eine Unterlage, z.B. ein Glasfaservlies oder ein Acrylatfaservlies, aufgetragen und getrocknet werden.

Die Filme sind dann fast oder ganz geruchsfrei und fühlen sich nicht mehr klebrig an. Die Beschichtung kann auf beiden Seiten des Trägers durch je zweimaliges Aufbringen erfolgen, worauf die Filme während 1 Stunde bei Raumtemperatur oder einige Minuten (5-10) in einem kalten Luftstrom getrocknet werden.

Bei der Herstellung von trägerlosen Filmen oder Folien wird der erfindungsgemässe Klebstoff durch Vergiessen auf eine Unterlage, z.B. auf eine Polyethylenfolie, und Trocknen bei Raumtemperatur in eine Filmform gebracht. Solche Filme oder Folien können auch durch Extrudieren oder Kalandrieren des Klebstoffes hergestellt werden. Die Folien sind farblos. Sie können durch einen Zusatz an Farbstoff oder Pigment zum Klebstoff mit einem gewünschten Farbton versehen werden.

Die zu Klebefolien verarbeiteten erfindungsgemässen Harzmischungen zeichnen sich gegenüber den in der DE-A 24 29 378 beschriebenen Folien durch im allgemeinen niedrigere Härtungstemperaturen (Aushärtung in kurzer Zeit bereits bei 80-90° C) und bessere Klebeeigenschaften bezüglich der Rollenschälfestigkeit aus.

Als Beschleuniger bei den Zweikomponentensystemen können sekundäre oder tertiäre Amine oder auch ein Kondensationsprodukt aus einem primären oder sekundären Amin und einem Aldehyd eingesetzt werden, vorzugsweise N,N-Dimethylanilin oder N,N-Dimethyl-p-toluidin oder ein Kondensationsprodukt aus einem 1 Mol Anilin oder Butylamin und 3 Mol Butyraldehyd. In der US Patentschrift 3 591 438 ist eine Anzahl geeigneter Beschleuniger beschrieben. Beim Verkleben kann man so vorgehen, dass man zunächst die eine oder beide der zu verklebenden Oberflächen mit dem Beschleuniger und dann die andere oder beide Oberflächen mit der Klebstoffkomponente versieht, worauf man die Oberflächen zusammenbringt. Der Beschleuniger kann zur besseren Unterscheidung von der Klebstoffkomponente noch ein farbiges Pigment enthalten.

Der Beschleuniger kann auch auf die beiden zu verklebenden Oberflächen, welche bereits mit dem Klebstoff versehen sind, aufgesprüht werden.

Nach 5 Minuten bis 1 Stunde erhält man Verklebungen mit Zugscherfestigkeiten von 10 bis 20 N/mm²; nach 24 Stunden können Werte über 30 N/mm² gemessen werden.

Man kann aber auch den Beschleuniger kurze Zeit vor der Verklebungsoperation der Klebstoffkomponente beimischen und die Klebstoffmischung auf eine oder beide zu verklebenden Oberflächen aufbringen. Es ist dabei lediglich zu beachten, dass die Zeit zwischen dem Vermischen und dem Verkleben so bemessen wird, dass die Klebmischung noch klebfähig ist.

Die Menge des Beschleunigers kann bis zu 50 Gew.-%, bezogen auf die Klebstoffkomponente, vorzugsweise 0,1 bis 5 Gew.-%, betragen.

Als zu verklebende Oberflächen eignen sich solche von Metallen, wie Stahl, Aluminium und seinen Legierungen, z. B. mit Magnesium und Silicium, Kupfer und seinen Legierungen, von sogenanntem Zincrometall (eine Zink-Chrom-Legierung), von polaren polymeren Materialien, wie Polyamiden, Polyurethanen, Polyestern, glasfaserverstärkten Kunststoffe, Holz, Glas, Keramik, Papier und Oberflächen, die mit Anstrichen versehen sind. Es können mit dem Zweikomponentensystem auch Verklebungen unter Wasser vorgenommen werden, z. B. von Stahl mit Stahl oder von Beton mit Stahl. In solchen Fällen ist die Verwendung von höherviskosen Beschleunigern, wie Amin-Aldehydprodukten, von besonderem Interesse. In Mischung mit Polyalkylenpulver eignen sich die erfindungsgemässen Klebstoffe auch zum Verkleben von vorbehandelten Polyethylenfolien.

Der Klebstoff bzw. die Klebstoffkomponente kann auch für die Verklebung zweier verschiedenartiger Materialien verwendet werden, z. B. von Metallen mit Beschichtungsfolien. Zweckmässig wird hierzu ein erfindungsgemässes Einkomponentensystem verwendet, mit welchem zunächst ein Film auf der zu verklebenden Beschichtungsfolie, welche z. B. aus einem Polyester besteht, erzeugt wird. Das getrocknete Gebilde kann bei Raumtemperatur aufgerollt gelagert und transportiert werden, wobei es seine Klebkraft nur sehr langsam verliert; bei Lagerung im Kühlschrank behält es monatelang seine anfängliche Klebkraft. Es wird dann auf die Metalloberfläche gebracht und bei erhöhter Temperatur gehärtet und verklebt.

Klebefolien mit oder ohne Träger eignen sich besonders bequem beim Verkleben von Metallflächen. Man legt sie zwischen die zu verklebenden Flächen, presst diese aneinander, z. B. mit Hilfe von Klammern, und lässt sie während mindestens 15 Minuten bei einer Temperatur von 80 bis 100° C. Die den Stoffen der Formel I, in welcher $R_1$ und $R_2$ zusammen mit der Gruppe $-\overset{\overset{O}{\|}}{C}-N-$ die Maleinimidgruppe bedeuten, zugrunde liegenden Maleinimide, welche noch durch 1 oder 2 Methylgruppen substituiert sein können, können in bekannter Weise hergestellt werden, z. B. nach der US-Patentschrift 3 618 290 oder 2 444 536 oder der deutschen Offenlegungsschrift 19 34 791. Die so hergestellten Imide werden nun chlorsulfoniert, z. B. indem man sie mit Chlorsulfonsäure reagieren lässt. So reagiert N-Arylmaleinimid mit dieser Säure im Überschuss bei Raumtemperatur mit hoher Ausbeute innert weniger Stunden zum Chlorsulfoaryl-maleinsäureimid.

Im folgenden wird die Herstellung einiger Haftvermittler beschrieben:

a) Chlorsulfoniertes 1-Naphthyl-N-maleinimid:

In einem 750 ml Sulfierkolben werden 39,6 g (0,404 Mol) Maleinsäureanhydrid und 110,0 g Methylenchlorid vorgelegt und unter schwacher Heizung gelöst (Lösung 1). 57,2 g (0,4 Mol) 1-Naphthylamin wird in 50 g Methylenchlorid gelöst, und diese Lösung wird langsam zu Lösung 1 zugetropft. Die Reaktion ist exotherm. Nach der Zugabe der Naphthylamin-Lösung kühlt man die entstandene Suspension auf 20° C.

Dann lässt man 61,4 g Essigsäureanhydrid langsam zutropfen; die Lösung wird viskos. Nachher werden 0,42 g Kobaltnaphthenat und anschliessend 20,2 g Triäthylamin zugetropft. Die letzte Reaktion ist exotherm. Mit Eis-Wasser-Kühlung wird die Temperatur auf 35° C eingestellt. Das Reaktionsgemisch wird bei 35° C während 3½ Stunden gerührt. Dann wird das Lösungsmittel am Rotavapor ohne Heizung entfernt. Zum Rückstand gibt man 20 ml Eiswasser unter Rührung. Das Gemisch wird über Nacht im Kühlschrank stehen gelassen; das Produkt kristallisiert aus.

Die Kristalle werden an der Nutsche noch zweimal mit 100 ml Eiswasser gewaschen, filtriert und getrocknet.

Am Ende wird das Produkt aus 100 ml Aceton umkristallisiert. Man erhält 64 g (71 %) kristallines Produkt. Schmelzpunkt: 115° C.

Die Elementaranalyse stimmt mit der folgenden Formel überein:

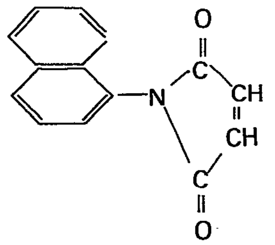

87,38 g (0,75 Mol) Chlorsulfonsäure wird vorgelegt und auf 10° C abgekühlt.

22,5 g (0,1 Mol) 1-Naphthylmaleinimid wird in 58 g Methylenchlorid gelöst und unter starkem Rühren in die Chlorsulfonsäure getropft. Die Zugabe dauert etwa 1½ Stunden. Nachher wird das Kühlbad entfernt und die Lösung während 4 Stunden bei Raumtemperatur gerührt.

In einem 1-Liter-Becherglas werden 100 ml Wasser plus 150 g Eis vorgelegt. Unter kräftigem Rühren lässt man jetzt die Chlorsulfonsäure-Lösung bei 0° C in 25 Minuten zulaufen. Es entsteht eine helle Suspension. Nach halbstündigem Rühren gibt man 130 ml $CH_2Cl_2$ dazu und rührt die Mischung 10 Minuten lang. Nachher wird die Mischung im Scheidetrichter getrennt und die wässrige Phase zweimal mit 50 ml $CH_2Cl_2$ extrahiert. Die vereinigten $CH_2Cl_2$-Phasen werden nochmals zweimal mit 50 ml Wasser ausgeschüttelt, abgetrennt und über $Na_2SO_4$ getrocknet. Das Lösungsmittel der klaren Lösung wird ohne Heizen am Rotavapor entfernt. Der Rückstand kristallisiert aus: etwa 19 g, Schmelzpunkt: 184-186° C.

Die Elementaranalyse und das Massenspektrum stimmen mit der folgenden Formel überein:

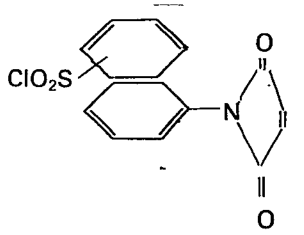

b) Chlorsulfophenylsuccinimid

40,0 g Bernsteinsäureanhydrid (0,4 Mol), 110,0 g Methylenchlorid, 37,2 g Anilin (0,4 Mol), 61,4 g Essigsäureanhydrid (0,6 Mol), 0,42 g Kobaltnaphthenat und 20,2 gTriethylamin (0,2 Mol) werden in einem 750 ml Sulfierkolben, ausgerüstet mit Rührer, Thermometer, Tropfrichter, Heiz- und Kühlbad, wie folgt verarbeitet:

Zum Bernsteinsäureanhydrid und Methylenchlorid wird das Anilin unter Rühren und exothermer Reaktion zugetropft. Nach ¾ Stunde ist die Zugabe beendet; das Reaktionsgemisch wird noch 1 Stunde lang bei etwa 42° C gerührt. Nach dem Abkühlen auf Raumtemperatur tropft man in einer ¼ Stunde das Essigsäureanhydrid in die Mischung. Nachher wird die Kobaltverbindung und anschliessend das Triethylamin zugegeben: die Farbe wird violett, das Gemisch geht unter leichter Exothermie in Lösung. Während weiteren 3 Stunden wird die Temperatur auf 35° C gehalten. Das Gemisch wird über Nacht stehen gelassen. Nachher wird es am Rotavapor ohne Heizung einrotiert: das Produkt kristallisiert aus. Man gibt 20 g Eis zum Reaktionsprodukt und lässt den Kolben 1 Tag lang im Kühlschrank stehen. Nachher wird das Produkt filtriert, mit Eiswasser gewaschen und getrocknet. Das Produkt wird aus Aceton umkristallisiert. Ausbeute: 60,0 g (86 % d. Th.), Schmelzpunkt: 153° C.

Elementaranalyse:
berechnet: C 68,56 % H 5,18 % N 7,99 %
gefunden: C 68,50 % H 5,10 % N 8,0 %

8,75 g (0,05 Mol) des Produktes (N-Phenylsuccinimid) werden langsam zu 44 g (0,38 Mol) Chlorsulfonsäure gegeben. Das Gemisch geht unter exothermer Reaktion in Lösung. Die Lösung wird während 5 Stunden bei 60° C gerührt und färbt sich dunkel. Der Kolbeninhalt wird langsam auf 100 ml Wasser plus 150 g Eis getropft. Nach etwa ½ Stunde gibt man 100 ml Methylenchlorid zu dem Gemisch, rührt 10 Minuten und trennt die Methylenchloridphase ab. Die Grundmischung wird noch zweimal mit 20 ml $CH_2Cl_2$ extrahiert und abgetrennt. Die vereinigten Methylenchloridphasen werden zweimal mit 20 ml Wasser gewaschen und getrennt. Die Methylenchloridphase wird auf $Na_2SO_4$ getrocknet, filtriert und einrotiert. Das Produkt schmilzt bei 190-193° C (Kristallisation aus Aceton).

Analyse:
berechnet:
C 43,89 % H 2,95 % N 5,12 % S 11,71 % Cl 12,95 %
gefunden:
C 42,5 % H 3,0 % N 4,9 % S 11,8 % Cl 12,3 %

c) Chlorsulfobenzylmaleinimid

Man vermischt in der unter b) genannten Apparatur 87,4 g (0,75 Mol) Chlorsulfonsäure und 18,7 g (0,1 Mol) Benzylmaleinimid während 5 Stunden bei 60° C. Nachher tropft man die Lösung in Eiswasser und rührt die Mischung während 30 Minuten. Darauf extrahiert man die Mischung mit Methylenchlorid wie unter b) beschrieben. Das zunächst flüssige Produkt kristallisiert langsam beim Stehenlassen.

Beispiel 1: 35 g ABS-Pulver werden in einer Mischung von 54 g Methylmethacrylat und 10 g Methacrylsäure bei Raumtemperatur (RT) gelöst. Zu der homogenen Emulsion werden 2 g p-Chlorsulfophenyl-maleinimid gegeben und während 2 Stunden gerührt. Nachher wird 1 g Ethylenglykoldimethacrylat zugefügt und während 3 Stunden bei RT gerührt. Zuletzt wird 0,5 g Cumolhydroperoxyd zugegeben, die Mischung während weiteren 3 Stunden gerührt und ausgeladen.

Die Brookfield-Viskosität dieser mit A bezeichneten Mischung beträgt 122 Pa s (Spindel Nr. 6/ lOU/min).

Ein Teil der Mischung wird zum Verkleben von zwei Metallstreifen verwendet. Die Prüfkörper weisen eine Überlappung von 12,5 mm x 25,0 mm auf.

Der eine Prüfkörper besteht aus 2 Stahlstreifen, der andere aus 2 Streifen einer Al-Mg-Si I-Legierung (Mg: 0,6 – 1 %, Si: 0,7 – 1,3 %, Mn: 0 – 0,5 %), z. B. unter Bezeichnung Anticorodal 100 B" von der Schweiz. Aluminium AG erhältlich, nachstehend kurz mit Al-Leg. bezeichnet.

Die Klebeverbindungen werden so hergestellt, dass man die vorher beschriebene Mischung auf einen Metallstreifen dünn aufträgt. Auf den anderen Metallstreifen wird ein bekannter Beschleuniger aus 3 Mol Butyraldehyd und 1 Mol Anilin (Akz. 1), (z. B. «Akzelerator 808» der Firma Du Pont) aufgetragen. Die zwei Streifen werden unmittelbar nach dem Beschichten aneinander gepresst, mit Klammern befestigt und gehärtet.

Die Zugscherfestigkeiten, die nach der Aushärtung der Mischung A bei Raumtemperatur (RT) während 24 Stunden mit verschiedenen Adherenden erzielt werden, sind in der Tabelle I zusammengefasst:

Tabelle 1
Mischung A

| Adherend | Zugscherfestigkeit ($N/mm^2$) |
|---|---|
| Al-Leg. geschliffen | 21,9 |
| Al.Leg. geätzt | 25,4 |
| Stahl geschliffen | 24,2 |
| Stahl entfettet | 22,2 |
| Stahl geölt | 19,1 |

In den folgenden Tabellen 2 – 4 wird die Zugscherfestigkeit in $N/mm^2$ einiger Verklebungen gemäss diesem Beispiel in Abhängigkeit der Härtungszeit (Tab. 2), der Prüftemperatur (Tab. 3) und einer Nachhärtungstemperatur (Tab. 4) angegeben; ferner wird die Zugscherfestigkeit nach Wasserlagerung und bei Verklebung öliger Metalloberflächen und schliesslich die sogenannte kritische Temperatur angegeben, wobei als Vergleich (V 1) eine Mischung gemäss DE-OS 2337049 folgende Zusammensetzung mitgeprüft wird:

- 32,6 g chlorsulfoniertes, verzweigtes Polyethylen
- 46,6 g Ethylmethacrylat
- 9,3 g Methacrylsäure
- 0,5 g 2,6-Di-tert. butyl-p-kresol
- 0,9 g Cumolhydroperoxid
- 0,9 g 1,3-Butylenglykoldimethacrylat
- 3,6 g eines Pigmentes
- 1,6 g eines flüssigen Epoxidharzes mit 5 Val/kg Epoxidwert
- 0,5 g γ-Methacryloxypropyldimethoxysilan

Tabelle 2
Härtungsgeschwindigkeit
Al-Leg. geätzt

| Härtungszeit bei RT | Zugscherfestigkeit $N/mm^2$) A | V 1 |
|---|---|---|
| 5 min | 10,6 | 14,3 |
| 15 min | 15,0 | 13,7 |
| 30 min | 17,2 | 19,3 |
| 1 h | 19,6 | 20,4 |
| 2 h | 20,4 | 21,6 |
| 24 h | 32,4* | 19,7 |

*Hier ist als Prüfkörper eine ähnliche Al-Mg-Legierung anderer Provenienz verwendet worden.

Tabelle 3
Zugscherfestigkeit in Abhängigkeit der Prüfungstemperatur
(Temperaturprofil)
Adherend: Al-Leg. geätzt
Härtung: 24 h/RT + 1 h 100° C

| Prüftemperatur | Zugscherfestigkeit $N/mm^2$ A | V 1 |
|---|---|---|
| – 20° C | 28,6 | 31,6 |
| 0° C | 27,7 | 30,6 |
| 20° C | 26,1 | 22,8 |
| 50° C | 29,9 | 18,9 |
| 75° C | 27,0 | 14,3 |
| 100° C | 23,6 | 10,1 |
| 125° C | 16,2 | 8,9 |

Tabelle 4
Heisse Nachhärtung
Adherend: Stahl, geschliffen
Härtung: 24 h/RT + Nachhärtung

| Härtung 24 h/RT Nachhärtung 1 h | Zugscherfestigkeit $N/mm^2$ A | V 1 |
|---|---|---|
| 80° C | 23,4 | 25,4 |
| 100° C | 22,7 | 24,6 |
| 150° C | 22,8 | 17,5 |
| 200° C | 24,1 | 11,2 |

Die Zugscherfestigkeit eines Prüflings aus geätzter Al-Leg., der während 24 Stunden bei Raumtemperatur und anschliessend eine Stunde bei 100° C gehärtet worden ist, beträgt nach 7tägiger Wasserlagerung bei 40° C bei einer Prüfungstemperatur von 75° C unter Verwendung der Mischung A 19,6 $N/mm^2$ und unter Verwendung der Mischung $V_1$ 12,0 $N/mm^2$. Die Zugscherfestigkeit eines Prüflings aus geöltem Stahl, der während 24 Stunden bei Raumtemperatur gehärtet worden ist, beträgt bei Verwendung der Mischung A 19,1 $N/mm^2$ und bei Verwendung der Mischung $V_1$ 10,8 $N/mm^2$.

Schliesslich weist ein Prüfling aus geätzter Al-Leg. bei der Bestimmung der Kurzzeitwärmefestigkeit eine kritische Temperatur ($T_{K_2}$-Wert) unter Verwendung der Mischung A von 130° C und

unter Verwendung der Mischung $V_1$ eine solche von 96° C auf. Bei der kritischen Temperatur handelt es sich um die Temperatur, bei welcher ein verklebter Prüfkörper unter bestimmter Zugbelastung auseinanderbricht. Sie ist ein Mass der Kurzzeitwärmefestigkeit und wird an Zugscherproben (vgl. DIN 53283) mit 12 mm Überlappung wie folgt gemessen: Die Proben werden in einem Ofen eingespannt und mit einer konstanten Last von 4 N/mm² versehen. Anschliessend wird die Temperatur gleichmässig mit 12° C in der Stunde so lange erhöht, bis die Klebfuge bricht. Die Bruchtemperaturen werden als kritische Temperaturen bezeichnet.

Als weiteren Vergleichsversuch bringt man auf den einen Metallstreifen eines Prüfkörpers aus geschliffenem Stahl eine Mischung $V_2$ gemäss dem Beispiel 27 der DE-OS 2525099, nämlich aus 25 Gew.-% Polychloropren (vertrieben als «Neopren W»), 61 Gew.-% Methylmethacrylat, 10 Gew.-% Methacrylsäure, 3 Gew.-% eines flüssigen Bisphenol A-Epoxidharzes und 1 Gew.-% Ethylendimethacrylat, welche zudem auf je 100 g Polychloropren 56 Mol Methansulfonylchlorid und auf 100 Teile der Mischung 0,5 Teile Cumolhydroperoxid enthält, auf den anderen Metallstreifen «Accelerator 808» und misst die Zugscherfestigkeit nach 24 Stunden bei Raumtemperatur. Man erhält keine messbare Haftung.

Beispiele 2 bis 10 (vgl. auch Tabelle 5)

Man geht wie im Beispiel 1 beschrieben vor, wobei man jedoch folgende Änderungen vornimmt:

2. Anstelle von 2 g werden 3 g p-Chlorsulfophenylmaleinimid in die Klebstoffkomponente gegeben: Mischung B.

Ein Zusatz von 1% Di-tert. butyl-p-kresol als Stabilisator erhöht die Lagerfähigkeit der Mischung B beträchtlich: Mischung B'.

3. Anstelle von 2 g p-Chlorsulfophenylmaleinimid werden 1 g p-Chlorsulfophenylmaleinimid und 1 g γ-Methacryloxypropyltrimethoxysilan («Silan A 174») verwendet: Mischung C.

4. Anstelle von 1 g Ethylenglykoldimethacrylat wird 1 g Butylenglykoldimethacrylat verwendet: Mischung D.

Diese Mischung D kann auch wie folgt hergestellt werden: 54 g Methylmethacrylat, 10 g Methacrylsäure und 2 g p-Chlorsulfophenyl-maleinimid werden bei RT während 15 Minuten gut verrührt. Darauf gibt man der Mischung 1 g Butylenglykol-(1,3)-dimethacrylat und 0,5 g Cumolhydroperoxid zu und verrührt die Mischung während 45 Minuten bei RT. Anschliessend gibt man der Mischung 35 g ABS-Pulver zu und mischt nochmals 30 Minuten bei RT. Die Mischung kann kühl gelagert werden.

5. Der Mischung A werden zusätzlich 2 g eines feingemahlenen schwach sauren Kationenaustauschers, einer vernetzten Methacrylsäureverbindung mit COOH-Gruppen («Amberlite IRC-50») zugefügt: Mischung E.

6. Anstelle von 35 g ABS-Pulver wird eine Mischung von je 17,5 g ABS-Pulver und Polystyrol verwendet: Mischung F.

7. Anstelle von 54 g Methylmethacrylat werden 54 g Ethylmethacrylat, anstelle von 1 Ethylenglykoldimethacrylat wird 1 g Butylenglykoldimethacrylat und anstelle von 2 g werden 3 g p-Chlorsulfophenylmaleinimid verwendet: Mischung G.

8. Anstelle von 2 g p-Chlorsulfophenylmaleinimid und des Beschleunigers aus Butyraldehyd und Anilin werden 3 g p-Chlorsulfophenylmaleinimid, d. h. Mischung B (vgl. Beispiel 2) und Dimethyl-p-toluidin als Beschleuniger verwendet.

9. Man verwendet Mischung B (vgl. Beispiel 2) und setzt dieser noch 2 g eines flüssigen Anionenaustauschers vom sekundären Amin-Typ aus N-Lauryl-N-trialkylmethylamin («Amberlite LA 2») zu: Mischung H.

10. Man setzt der Mischung D (vgl. Beispiel 4) noch 10 g Chlorparaffin mit 56% Chlor («VP Hordaflex SP» der Firma Hoechst AG) zu: Mischung J.

Die Zugscherfestigkeit von Prüflingen aus Magnesium und Silicium enthaltender Aluminiumlegierung (Al-Leg.) mit geschliffener Oberfläche («Anticorodal») unter Verwendung der genannten Mischungen weisen nach 24 stündiger Härtung bei Raumtemperatur die in Tabelle 5 wiedergegebenen Werte in N/mm² auf.

Tabelle 5

| Beispiel | Mischung | Beschleuniger | Zugscherfestigkeit N/mm² |
|---|---|---|---|
| 2 | B | wie in Beispiel 1 | 23,1 |
| 2 | B' | wie in Beispiel 1 | 21,8 |
| 3 | C | wie in Beispiel 1 | 21,3 |
| 4 | D | wie in Beispiel 1 | 25,0 |
| 5 | E | wie in Beispiel 1 | 26,3 |
| 6 | F | wie in Beispiel 1 | 19,9 |
| 7 | G | wie in Beispiel 1 | 20,8 |
| 8 | B | Dimethyl-p-toluidin | 23,9 |
| 9 | H | wie in Beispiel 1 | 24,4 |
| 10 | J | wie in Beispiel 1 | 22,5 |

Beispiel 11

Zur Mischung D (vgl. Beispiel 4) werden noch 5g Chlorparaffin als Verdampfungsinhibitor beigefügt: Mischung K. Im weiteren geht man vor wie in Beispiel 1 beschrieben und bestimmt die sogenannte «offene Zeit», d.h. die Zeit, welche zwischen dem Auftragen der Mischung auf die Oberfläche eines Prüfstreifens bis zum Anpressen des Prüfbleches an den zweiten Streifen verstreicht und in welcher noch eine Klebwirkung feststellbar ist, indem man die Zugscherwerte bestimmt. Als Prüfkörper dienen wiederum Streifen aus Al-Leg.; die Härtung erfolgt während 24 Stunden bei Raumtemperatur. In der Tabelle 6 sind einige Werte unter Verwendung des Beschleunigers Akz. 1 (=Kondensationsprodukt aus 3 Mol Butyraldehyd und 1 Mol Anilin) und Akz. 2 (=N,N-Dimethyl-p-toluidin) sowie zum Vergleich die entsprechenden Werte bei Verwendung der Mischung A (Beispiel 1) und der Vergleichsmischung V1 (vgl. Beispiel 1) angegeben.

Tabelle 6

Zugscherwerte in $N/mm^2$
«Offene Zeit»

| | Beschleuniger | 1 Min | 3 Min | 5 Min | 10 Min | 15 Min | 20 Min |
|---|---|---|---|---|---|---|---|
| Mischung K | Akz. 1 | 20,1 | 20,5 | 22,5 | 15,5 | 18,9 | 15,9 |
| Mischung K | Akz. 2 | 26,0 | 25,2 | 22,8 | 21,1 | 23,9 | 22,6 |
| Mischung A | Akz. 1 | 24,9 | 15,0 | 11,1 | 11,1 | 9,2 | 6,9 |
| V 1 | Akz. 1 | 14,8 | 13,8 | 6,8 | 6,6 | 5,4 | 5,0 |

Beispiele 12–17

In diesen Beispielen wird gezeigt, dass bestimmte Zusätze die Güte der Verklebungen nicht zu beeinträchtigen vermögen, sondern sogar erhöhen können.

Die Grundmischung besteht in allen Beispielen aus 35,0 Gew.-% ABS-Pulver, 54,0 Gew.-% Methylmethacrylat, 10 Gew.-% Methacrylsäure, 1 Gew.-% Butylenglykoldimethacrylat, 0,5 Gew.-% Cumolhydroperoxid und 3,0 Gew.-% p-Chlorsulfophenylmaleinimid. Zugesetzt werden verschiedene Säuren und Anhydride in Mengen von 2g.

Als Beschleuniger wird gewöhnlich Akz. 1 und in einem Fall Akz. 2 verwendet. Der Prüfkörper besteht aus Al-Leg.-Streifen, die Härtung erfolgt während 24 Stunden bei Raumtemperatur. Die Zugscherwerte sind in der Tabelle 7 angegeben.

Tabelle 7

| Beispiel | 2g Zusatz zur Grundmischung | Beschleuniger | Zugscherwert $N/mm^2$ |
|---|---|---|---|
| 12 | Maleinsäure | Akz. 1 | 23,7 |
| 13 | Fumarsäure | Akz. 1 | 23,1 |
| 14 | Bernsteinsäure | Akz. 1 | 22,2 |
| 15 | Weinsäure | Akz. 1 | 23,7 |
| 16 | Maleinsäureanhydrid | Akz. 1 | 25,0 |
| | Maleinsäureanhydrid | Akz. 2 | 25,0 |
| 17 | $B_2O_3$ | Akz. 1 | 26,3 |

Beispiel 18

Unterwasserverklebung

Die Mischung A (vgl. Beispiel 1) wird unter Wasser auf den einen Teil des Prüfkörpers verstrichen; auf den anderen wird der Beschleuniger Akz. 1 gebracht. Die beiden Streifen werden miteinander verklebt und unter Wasser bei Raumtemperatur ausgehärtet. Die Zugscherkräfte sind in $N/mm^2$ in der Tabelle 8 verzeichnet, worin auch die entsprechenden Werte, welche die Vergleichsmischung ergibt, angegeben sind.

Tabelle 8

| Adherend | Härtungszeit | Zugscherfestigkeit N/mm² |
|---|---|---|
| Al-Leg., geschliffen | 1 h | 6,1 |
| Al-Leg., geschliffen | 24 h | 19,5 |
| Stahl, geschliffen | 1 h | 9,3 |
| Stahl, geschliffen | 24 h | 13,9 |
| Vergleichsversuch mit Mischung V1: | | |
| Al-Leg., geschliffen | 1 h | 3,2 |
| Al-Leg., geschliffen | 24 h | 7,2 |
| Stahl, geschliffen | nicht auftragbar | |

Beispiel 19

In diesem Beispiel wird die Klebwirkung von zwei verschiedenen Klebstoffen ohne Beschleuniger beschrieben und mit der in Beispiel 1 als V1 bezeichneten Vergleichsmischung als Einkomponentensystem und auch unter Zusatz von «Akzelerator 808» (Akz.) als Beschleuniger zu der Vergleichsmischung verglichen.

Als erfindungsgemässe Mischungen werden die folgenden verwendet:

Mischung D

Vgl. Beispiel 4.

Mischung K

Man fügt der Mischung D noch 5 g Chlorparaffin als Verdampfungsinhibitor bei.

Vorgehen

Die Mischungen D, K und V1 wie auch V1 plus Akz. werden wie in Beispiel 1 beschrieben auf Prüfkörper aufgebracht. Die Oberfläche der Metallstreifen kann dabei geschliffen, ölig oder entfettet sein. Im Unterschied zu Beispiel 1 werden beide Metallstreifen mit dem Klebstoff versehen (der Beschleuniger entfällt, ausgenommen ist der eine Vergleichsversuch). Unmittelbar nach dem Beschichten werden die Streifen aufeinandergepresst, mit Klammern befestigt und während 1 Stunde bei Raumtemperatur und einer weiteren Stunde bei 100° C gehärtet. Darauf werden die Zugscherfestigkeiten in N/mm² gemessen. Die Ergebnisse sind in der Tabelle 9 festgehalten.

Tabelle 9

| Klebstoff | Adherend | Zugscherfestigkeit N/mm² |
|---|---|---|
| D | Al-Leg. geschliffen | 21,3 |
| D | Al-Leg. entfettet | 20,4 |
| D | Al-Leg. ölig | 21,5* |
| D | Stahl entfettet | 17,2 |
| D | Stahl ölig | 12,7 |
| K | Al-Leg. geschliffen | 17,0 |
| K | Al-Leg. entfettet | 18,7 |
| K | Stahl geschliffen | 17,2 |
| K | Stahl ölig | 17,8 |
| $V_1$+ | Al-Leg. geschliffen | – (delaminiert) |
| $V_1$+Akz. | Al-Leg. geschliffen | 14,8 |

* Falls die verklebte Probe während weiteren 30 Minuten auf 240° C erhitzt wird, sinkt die Zugscherfestigkeit auf 17,7 N/mm².

Beispiel 20

Mischung L

35 g ABS-Pulver werden in einer Mischung von 54 g Methylmethacrylat und 10 g Methacrylsäure bei Raumtemperatur gelöst. Zu der homogenen Emulsion werden 2 g Chlorsulfonaphthyl-(1)-maleinimid gegeben. Nachdem man die Mischung während 2 Stunden gerührt hat, fügt man 1 g Butylenglykoldimethacrylat zu und rührt das Gemisch während weiteren 3 Stunden bei Raumtemperatur. Darauf setzt man noch 0,5 g Cumolhydroperoxid zu und rührt das Gemisch während weiteren 3 Stunden.

a) Die Mischung L wird wie in Beispiel 1 beschrieben auf einen Metallstreifen aus geschliffener Aluminiumlegierung gebracht; auf einem weiteren solchen Streifen gibt man den Beschleuniger Akz. 1 (aus 3 Mol Butyraldehyd und 1 Mol Anilin). Nach dem Zusammenpressen der beiden Streifen erfolgt die Härtung während 24 Stunden bei Raumtemperatur. Es wird eine Zugfestigkeit von 19,7 N/mm² gemessen.

b) Falls man die Mischung L als Einkomponentensystem verwendet, beschichtet man die beiden Metallstreifen aus Aluminiumlegierung mit der Mischung L allein und führt die Härtung während 1 Stunde bei Raumtemperatur, dann während 1 Stunde bei 100° C und schliesslich während 30 Minuten bei 240° C durch. Die Zugfestigkeit beträgt danach 22,4 N/mm².

Beispiel 21

Die erfindungsgemässe Mischung D (vgl. Beispiel 4) wird mit einem Laminierhaken zweimal auf beide Seiten eines Glasfaservlieses aufgetragen und während 1 Stunde bei Raumtemperatur getrocknet. Die Dicke des trockenen, klebefreien Films beträgt im ganzen etwa 0,56 mm. (Dieser Film kann zwischen Polyethylenfolien während mehrerer Monate im Kühlschrank gelagert werden, ohne dass seine Klebkraft abnimmt). Der Film wird zwischen zwei Probestreifen gelegt, die zusammengepresst und während einer Stunde bei 100° C gehalten werden. Die zwei Probestreifen bilden einen Prüfkörper mit einer Überlappung von 12,5 mm×25,0 mm.

Die Zugscherfestigkeit verschiedener Prüfkörper ist in der folgenden Tabelle 10 gegeben:

Tabelle 10

| Adherend (Metall geschliffen) | Zugscherfestigkeit N/mm² | Bemerkung |
|---|---|---|
| Kupfer | 12,7 | |
| Messing | 6,1 | |
| Galv. Eisen | 12,9 | |
| Stahl | 14,2 | |
| Glas | 9,6 | Materialbruch |
| Acrylglas | 12,6 | Materialbruch |
| Al/ABS/Al | 6,5 | Materialbruch |
| Polycarbonat | 8,7 | |
| Holz | 6,3 | |
| Holz/Stahl | 10,1 | |
| Al/Gummi/Al | 3,3 | Materialbruch |
| Stahl/Glas | 6,1 | Materialbruch |
| SMC (=Sheet Molding Compounds) | 13,2 | |

Beispiel 22

Mit der Mischung D wird wie in Beispiel 21 beschrieben ein Film hergestellt, welcher auf einen Prüfkörper aus geätzter Aluminiumlegierung gebracht wird. Der Prüfkörper wird während 1 Stunde bei 100° C gehalten. Es wird darauf eine Rollenschälfestigkeit gemäss DIN 53289 von 11,0 $N/mm^2$ gemessen.

Bei Verwendung eines trägerlosen Films aus der Mischung D weist der Prüfkörper eine Rollenschälfestigkeit von 15,8 $N/mm^2$ auf.

Beispiele 23 bis 28

In den folgenden Beispielen werden die angegebenen Haftverbesserer in eine Mischung aus 35 g ABS (Acrylnitril-Butadien-Styrol-Terpolymer), 54 g Methylmethacrylat, 10 g Methacrylsäure, 1 g Butylenglykoldimethacrylat und 1 g Cumolhydroperoxid eingerührt. Die Mischung wird hierauf auf einen Streifen aus geschliffenem Stahl gebracht und mit einem weiteren Stahlstreifen, auf welchem der Beschleuniger Akz. 1 aufgetragen ist, in der im Beispiel 1 beschriebenen Weise verklebt. Die Tabelle 11 zeigt die Zugscherfestigkeit der nach 15 Minuten, 1 Stunde und 24 Stunden bei Raumtemperatur gehärteten Prüflinge.

Tabelle 11

| Beispiel | Haftverbesserer | Menge, g | Zugscherfestigkeit in N/mm² nach ¼ h | 1 h | 24 h |
|---|---|---|---|---|---|
| 23 | N-Acetylsulfanylchlorid | 1,73 | 6,5 | 12,2 | 19,7 |
| 24 | Succinimidobenzylsulfochlorid | 0,71 | 7,5 | 3,9 | 19,1 |
| 25 | 2-Phthalimidoethansulfochlorid | 0,72 | 5,4 | 13,6 | 19,2 |
| 26 | Benzylmaleinimidsuflochlorid | 2,1 | 12,5 | 12,7 | 18,6 |
| 27 | o-Tolylmaleinimidsulfochlorid | 2,0 | delaminiert | 12,1 | 23,0 |
| 28 | p-Tolylmaleinimidsulfochlorid | 2,0 | delaminiert | 13,7 | 19,0 |
| Vergleich: | ohne Haftverbesserer | – | delaminiert | delaminiert | 11,2 |

Beispiel 29

Man verwendet die Mischung M, die sich von der Mischung D dadurch unterscheidet, dass sie anstelle von 0,5 g Cumolhydroperoxid 0,9 g enthält. Dazu gibt man noch 2 g Polyethylenpulver (Hochdruckpolyethylen, z. B. das von der Firma Plast-Labor SA, Bulle, vertriebene Coathylene-P 50, mit dem Schmelzbereich 116–119° C und der Dichte von 0,935) und rührt das Gemisch während 1 Stunde bei Raumtemperatur.

Unter Verwendung des Beschleunigers Akz. 1 wird ein geschliffenes Aluminiumblech mit Corona-Entladung vorbehandelter Polyethylenfolie (P-Tex N-100) verklebt. Nach 15 Minuten bei 100° C erhält man eine Rollenschälfestigkeit von 7,1 $N/mm^2$.

**Patentansprüche**

1. Klebstoff bzw. Klebstoffkomponente, enthaltend 30 bis 80 Gew.-% mindestens eines polymerisierbaren Vinylmonomers und 10 bis 50 Gew.-% mindestens eines Vinylpolymers, 0,05 bis 10 Gew.-% einer freie Radikale erzeugenden Verbindung sowie als Haftverbesserer eine Verbindung mit der Gruppe $-SO_2Cl$, dadurch gekennzeichnet, dass er bzw. sie als Haftverbesserer 0,1 bis 15 Gew.-% eines am Stickstoffatom durch eine chlorsulfonierte Alkyl-, Aryl- oder Aralkylgruppe substituierten Säureamids oder -imids der Formel I

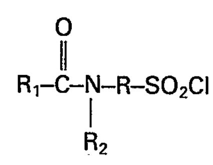

(I)

enthält, in welcher R eine Alkylengruppe mit 1 bis 25 Kohlenstoffatomen oder eine gegebenenfalls substituierte Phenylen-, Naphthylen- oder Phenylenalkylengruppe mit 1 bis 4 Kohlenstoffatomen im Alkylenteil, $R_1$ und $R_2$ je Wasserstoff oder eine Alkylgruppe mit 1 bis 4 Kohlenstoffatomen oder

$R_1$ und $R_2$ zusammen mit der $-\overset{\overset{O}{\|}}{C}-N-$Gruppe einen heterocyclischen Ring, der gesättigt oder ungesättigt sein und durch 1 oder 2 Methylgruppen substituiert sein kann und ausser dem in der Formel I angegebenen N-Atom kein weiteres Heteroatom im Ring aufweist, bedeuten, wobei die Prozentangaben auf den Klebstoff bzw. die Klebstoffkomponente bezogen sind.

2. Klebstoff bzw. Klebstoffkomponente gemäss Patentanspruch 1, dadurch gekennzeichnet, dass $R_1$ und $R_2$ in der Formel I zusammen mit der

$-\overset{\overset{O}{\|}}{C}-N-$Gruppe die gegebenenfalls durch 1 oder 2 Methylgruppen substituierte Maleinimidgruppen bedeuten.

3. Klebstoff bzw. Klebstoffkomponente gemäss Patentanspruch 2, dadurch gekennzeichnet, dass R in der Formel I die Phenylengruppe bedeutet.

4. Klebstoff bzw. Klebstoffkomponente gemäss Patentanspruch 1, dadurch gekennzeichnet, dass er bzw. sie als Vinylmonomer Methyl- oder Ethylacrylat, Methyl- oder Ethylmethacrylat, Styrol und/oder Chlorstyrol enthält.

5. Klebstoff bzw. Klebstoffkomponente gemäss Patentanspruch 1, dadurch gekennzeichnet, dass er bzw. sie als Vinylpolymer ein Acrylnitril-Butadien-Styrol-Terpolymer, ein Butadien-Styrol-Copolymer, ein Isopren-Styrol-Copolymer, ein Polystyrol und/oder ein chloriertes Polyethylen enthält.

6. Klebstoff bzw. Klebstoffkomponente gemäss Patentanspruch 1, dadurch gekennzeichnet, dass er bzw. sie als freie Radikale erzeugende Verbindung ein organisches Peroxid oder Hydroperoxid enthält.

7. Klebstoff bzw. Klebstoffkomponente gemäss Patentanspruch 1, dadurch gekennzeichnet, dass er bzw. sie 5 bis 20 Gew.-%, bezogen auf die Klebstoffkomponente, eines weiteren Haftverbesserers, vorzugsweise Methacrylsäure, enthält.

8. Klebstoff oder Klebstoffkomponente gemäss Patentanspruch 1 oder 6, dadurch gekennzeichnet, dass er bzw. sie 0,1 bis 10 Gew.-%, bezogen auf den Klebstoff bzw. die Klebstoffkomponente, eines Vernetzers, eines Verdampfungsinhibitors, eines Stabilisators, eines Haftvermittlers, eines Epoxidharzes und/oder eines Pigmentes enthält.

9. Klebstoff bzw. Klebstoffkomponente gemäss Patentanspruch 8, dadurch gekennzeichnet, dass er bzw. sie als Vernetzer ein Dimethacrylat, z.B. 1,3-Butylenglykoldimethacrylat, enthält.

10. Klebstoff bzw. Klebstoffkomponente gemäss Patentanspruch 8, dadurch gekennzeichnet, dass er bzw. sie als Verdampfungsinhibitor ein Chlorparaffin enthält.

11. Verwendung des Klebstoffes gemäss einem der Patentansprüche 1 bis 10 als Einkomponentensystem ohne Zusatz eines Beschleunigers zum Verkleben von 2 Oberflächen miteinander bei einer Temperatur von 80–250° C.

12. Verwendung der Klebstoffkomponente gemäss einem der Patentansprüche 1 bis 10 zusammen mit einem Beschleuniger zum Verkleben von 2 Oberflächen miteinander.

13. Verwendung gemäss Patentanspruch 12, dadurch gekennzeichnet, dass als Beschleuniger ein sekundäres oder tertiäres Amin oder ein Kondensationsprodukt aus einem primären oder sekundären Amin und einem Aldehyd eingesetzt wird, vorzugsweise N,N-Dimethyl-anilin, N,N-Dimethyl-p-toluidin oder ein Kondensationsprodukt aus 1 Mol Anilin oder Butylamin und 3 Mol Butyraldehyd.

14. Verwendung gemäss Patentanspruch 12, dadurch gekennzeichnet, dass mindestens die eine der zu verklebenden Oberflächen mit dem Beschleuniger und mindestens die andere mit der Klebstoffkomponente versehen wird.

15. Verwendung gemäss einem der Patentansprüche 11 oder 12, dadurch gekennzeichnet, dass Oberflächen von Metallen, polymeren Materialien, Holz, Papier, Glas und Keramik sowie mit Anstrichen versehene Oberflächen zusammengeklebt werden.

16. Verwendung gemäss Patentanspruch 11, dadurch gekennzeichnet, dass der Klebstoff in Form einer getrockneten Folie mit oder ohne Träger zwischen die zu verklebenden Flächen gebracht wird.

**Claims**

1. An adhesive or adhesive component containing 30 to 80 per cent by weight of at least one polymerisable vinyl monomer and 10 to 50 per cent by weight of at least one vinyl polymer, as well as 0.05 to 10 per cent by weight of a compound producing free radicals, and, as adhesion promoter, a compound having the group $-SO_2Cl$ which adhesive or adhesive component contains, as adhesion promoter, 0.1 to 15 per cent by weight of an acid amide or imide which is substituted on the nitrogen atom by a chlorosulfonated alkyl, aryl or aralkyl group, and which corresponds to the formula I

$$R_1-\overset{\overset{O}{\|}}{C}-\underset{\underset{R_2}{|}}{N}-R-SO_2Cl \qquad (I)$$

in which R is an alkylene group having 1 to 25 carbon atoms, or a substituted or unsubstituted phenylene, naphthylene or phenylenealkylene group having 1 to 4 carbon atoms in the alkylene moiety, $R_1$ and $R_2$ are each hydrogen or an alkyl group having 1 to 4 carbon atoms, or $R_1$ and $R_2$

together with the $-\overset{\overset{O}{\|}}{C}-N-$ group form a heterocyclic ring which can be saturated or unsaturated and can be substituted by 1 or 2 methyl groups and which, in addition to the N atom given in the

formula I, contains no further hetero atom in the ring, with the percentage values being calculated relative to the adhesive or adhesive component.

2. An adhesive or adhesive component according to Claim 1, wherein $R_1$ and $R_2$ in the formula I together with the $-\overset{\overset{O}{\|}}{C}-N-$ group form the maleimide group which is unsubstituted or substituted by 1 or 2 methyl groups.

3. An adhesive or adhesive component according to Claim 2, wherein R in the formula I is the phenylene group.

4. An adhesive or adhesive component according to Claim 1, which contains as vinyl monomer: methyl or ethyl acrylate, methyl or ethyl methacrylate, styrene and/or chlorostyrene.

5. An adhesive or adhesive component according to Claim 1, which contains as vinyl polymer: an acrylonitrile-butadiene-styrene terpolymer, a butadiene-styrene copolymer, an isoprene-styrene copolymer, a polystyrene and/or a chlorinated polyethylene.

6. An adhesive or adhesive component according to Claim 1, which contains an organic peroxide or hydroperoxide as the compound producing free radicals.

7. An adhesive or adhesive component according to Claim 1, which contains 5 to 20 per cent by weight, relative to the adhesive component, of a further adhesion promoter, preferably methacrylic acid.

8. An adhesive or adhesive component according to Claim 1 or 6, which contains 0.1 to 10 per cent by weight, relative to the adhesive or adhesive component, of a crosslinking agent, a vaporisation inhibitor, a stabiliser, an adhesion promoter, an epoxide resin and/or a pigment.

9. An adhesive or adhesive component according to Claim 8, which contains a dimethacrylate, for example 1,3-butylene glycol dimethacrylate, as the crosslinking agent.

10. An adhesive or adhesive component according to Claim 8, which contains a chlorinated paraffin as the vaporisation inhibitor.

11. Use of the adhesive according to any one of Claims 1 to 10 as a one-component system, without the addition of an accelerator, for bonding 2 surfaces together at a temperature of 80–250° C.

12. Use of the adhesive component according to any one of Claims 1 to 10, together with an accelerator, for bonding 2 surfaces together.

13. Use according to Claim 12, wherein the accelerator used is a secondary or tertiary amine, or a condensation product from a primary or secondary amine and an aldehyde, preferably N,N-dimethyl-aniline, N,N-dimethyl-p-toluidine, or a condensation product from 1 mol of aniline or butylamine and 3 mols of butyraldehyde.

14. Use according to Claim 12, wherein at least one of the surfaces to be bonded is provided with the accelerator and at least the other surface with the adhesive component.

15. Use according to one of Claims 11 or 12, wherein surfaces of metals, polymeric materials, wood, paper, glass and ceramics and also surfaces provided with coatings are bonded together.

16. Use according to Claim 11, wherein the adhesive is converted into the form of a dried sheet, with or without carrier, and the sheet itself is subsequently placed between the surfaces to be bonded.

**Revendications**

1. Colle ou composante colle contenant de 30 à 80% en poids d'au moins un monomère vinylique polymérisable, de 10 à 50% en poids d'au moins un polymère vinylique, de 0,05 à 10% en poids d'un composé générateur de radicaux libres et, comme améliorateur d'adhérence, un composé porteur d'un radical $-SO_2Cl$, colle ou composante colle caractérisée en ce qu'elle contient, comme améliorateur d'adhérence, de 0,1 à 15% en poids d'un amide ou imide d'acide portant comme substituant sur son atome d'azote un radical alkyle, aryle ou arylalkyle chlorosulfoné répondant à la formule (I):

$$R_1-\overset{\overset{O}{\|}}{C}-\underset{\underset{R_2}{|}}{N}-R-SO_2Cl \qquad (I)$$

dans laquelle R représente un radical alkylène contenant de 1 à 25 atomes de carbone ou un radical phénylène, naphtylène ou phénylène-alkylène éventuellement substitué et contenant de 1 à 4 atomes de carbone dans sa partie alkylène, $R_1$ et $R_2$ représentent chacun l'hydrogène ou un radical alkyle contenant de 1 à 4 atomes de carbone, ou $R_1$ et $R_2$ forment ensemble et avec le groupe $-\overset{\overset{O}{\|}}{C}-N-$ un noyau hétérocyclique, saturé ou insaturé, qui peur porter 1 ou 2 radicaux méthyles et qui ne contient pas d'hétéroatome autre que l'atome d'azote représenté sur la formule (I), les pourcentages indiqués étant rapportés à la colle ou à la composante colle.

2. Colle ou composante colle selon la revendication 1, caractérisée en ce que $R_1$ et $R_2$, dans la formule (I), forment ensemble et avec le groupe $-\overset{\overset{O}{\|}}{C}-N-$ un radical maléimido éventuellement porteur d'un ou deux radicaux méthyles.

3. Colle ou composante colle selon la revendication 2, caractérisée en ce que R, dans la formule (I), représente un radical phénylène.

4. Colle ou composante colle selon la revendication 1, caractérisée en ce qu'elle contient, comme monomère vinylique, de l'acrylate de méthyle ou éthyle, du méthacrylate de méthyle ou d'éthyle, du styrène et/ou du chlorostyrène.

5. Colle ou composante colle selon la revendication 1, caractérisée en ce qu'elle contient, comme polymère vinylique, un terpolymère acrylonitrile/butadiène/styrène, un copolymère butadiène/styrène, un copolymère isoprène/styrène, un polystyrène et/ou un polyéthylène chloré.

6. Colle ou composante colle selon la revendication 1, caractérisée en ce qu'elle contient, comme composé générateur de radicaux libres, un peroxyde ou un hydroperoxyde organique.

7. Colle ou composante colle selon la revendication 1, caractérisée en ce qu'elle contient de 5 à 20% en poids, par rapport à la composante colle, d'un autre améliorateur d'adhérence, qui est de préférence l'acide méthacrylique.

8. Colle ou composante colle selon l'une des revendications 1 à 6, caractérisée en ce qu'elle contient de 0,1 à 10% en poids, par rapport à la colle ou à la composante colle, d'un réticulant, d'un inhibiteur d'évaporation, d'un stabilisant, d'un adjuvant d'adhérence, d'une résine époxydique et/ou d'un pigment.

9. Colle ou composante colle selon la revendication 8, caractérisée en ce qu'elle contient, comme réticulant, un diméthacrylate, par exemple le diméthacrylate de butane-diol-1,3.

10. Colle ou composante colle selon revendication 8, caractérisée en ce qu'elle contient, comme inhibiteur d'évaporation, une chloroparaffine.

11. Application de la colle selon l'une quelconque des revendications 1 à 10 comme système à une seule composante non additionné d'un accélérateur, pour le collage de deux surfaces entre elles à une température de 80 à 250° C.

12. Application de la composante colle selon l'une quelconque des revendications 1 à 10 associée à un accélérateur pour le collage de deux surfaces entre elles.

13. Application selon la revendication 12, caractérisée en ce qu'on utilise, comme accélérateur, une amine secondaire ou tertiaire ou un produit de condensation d'une amine primaire ou secondaire et d'un aldéhyde, de préférence la N,N-diméthylaniline, la N,N-diméthyl-p-toluidine ou un produit de condensation de 1 mole d'aniline ou de butylamine et 3 moles de butyraldéhyde.

14. Application selon la revendication 12, caractérisée en ce qu'au moins l'une des surfaces à coller est munie de l'accélérateur et au moins l'autre de la composante colle.

15. Application selon l'une des revendications 11 et 12, caractérisée en ce qu'on colle ensemble des surfaces de métaux, de matières polymères, de bois, de papier, de verre et de céramique ainsi que des surfaces munies de revêtements.

16. Application selon la revendication 11, caractérisée en ce que la colle est appliquée sous la forme d'une feuille séchée, avec ou sans support, entre les surfaces à coller.